# EUROPÄISCHE PATENTANMELDUNG

(11) **EP 1 054 286 A1**
(43) Veröffentlichungstag der Anmeldung: **22.11.2000**
(21) Anmeldenummer: 00106516.8
(22) Anmeldetag: 25.03.2000
(51) Int. Cl.: G02B 27/18, G01B 11/00, B23K 26/02

(54) **Vorrichtung zum Erzeugen einer optischen Markierung oder Abbildung auf einem Objekt**

(30) Priorität: 22.04.1999 DE 29907156 U
(71) Anmelder: Z - Laser, Optoelektronik GmbH, 79098 Freiburg (DE)
(72) Erfinder: Zimmermann, Kurt-Michael, 79098 Freiburg (DE)
(74) Vertreter: Schmitt, Hans, Dipl.-Ing.

(57) **Zusammenfassung**

Eine Vorrichtung (1) zum Erzeugen einer optischen Abbildung auf einem Objekt (2) weist eine Lichtquelle (3) zum Erzeugen eines Lichtbündels (4) und eine Positioniereinrichtung (5) zum Positionieren des Lichtbündels (4) an unterschiedlichen Stellen des Objekts (2) auf. Zur zweidimensionalen Lageveränderung der optischen Abbildung auf dem Objekt (2) hat die Positioniereinrichtung (5) wenigstens zwei im Strahlengang des Lichtbündels (4) angeordnete, Umlenkstellen (12a, 12b, 12c, 14) aufweisende optische Umlenkeinrichtungen (6, 7), die jeweils um eine Schwenkachse (8, 9) verschwenkbar gelagert sind. Die Schwenkachse (8) der ersten, lichtquellenseitigen Umlenkeinrichtung (6) ist in der Mittelachse des Lichtbündels (4) angeordnet. Der Umlenkeinrichtung (6) ist eine ortsfeste Reflexionseinrichtung (23) nachgeschaltet, deren Reflexionsfläche (24a, 24b) ein Teil einer rotationssymmetrisch zur Schwenkachse (8) verlaufenden Fläche ist, die so angeordnet ist, daß die Mittelachse des an der Umlenkstelle (12a) der ersten Umlenkeinrichtung (6) reflektieren Lichtstrahles (21a, 21b, 21c) die Schwenkachse (8) der ersten Umlenkeinrichtung (6) schneidet. Die Umlenkstelle (14) der zweiten Umlenkeinrichtung (7) ist in diesem Schnittpunkt angeordnet ist und die Schwenkachse (9) der zweiten Umlenkeinrichtung (7) verläuft durch diesen Schnittpunkt.

## Beschreibung

Die Erfindung betrifft eine Vorrichtung zum Erzeugen einer optischen Markierung oder Abbildung auf einem Objekt, beispielsweise einem Werktisch, mit einer Lichtquelle zum Erzeugen eines auf das Objekt gerichteten Lichtbündels, und mit einer Positioniereinrichtung zum Positionieren des Lichtbündels an unterschiedlichen Stellen des Objekts, wobei die Positioniereinrichtung zur zweidimensionalen Lageveränderung der optischen Markierung auf dem Objekt wenigstens zwei im Strahlengang des Lichtbündels angeordnete, Umlenkstellen aufweisende optische Umlenkeinrichtungen hat, wobei die Umlenkeinrichtungen jeweils um eine Schwenkachse verschwenkbar gelagert und mittels Schwenkantrieben positionierbar sind, und wobei die Schwenkachsen quer zueinander angeordnet sind.

Eine derartige Vorrichtung ist aus der Praxis bekannt. Sie weist einen Laser zum Erzeugen eines auf das Objekt gerichteten Lichtbündels auf, in dessen Strahlengang eine Positioniereinrichtung mit zwei als Umlenkspiegel ausgebildeten Umlenkeinrichtungen angeordnet ist. Die Umlenkeinrichtungen sind jeweils an einem zu dem Lichtbündel ortsfesten Gehäuseteil verschwenkbar gelagert und mittels eines Galvanometers in unterschiedlichen Schwenkpositionen um eine Neutrallage positionierbar. Zum zweidimensionalen Auslenken des Lichtbündels auf unterschiedliche Stellen der Oberfläche des Objekts sind die Schwenkachsen der Umlenkeinrichtungen rechtwinklig zueinander angeordnet. Die Steuerung der Schwenkpositionen der Umlenkeinrichtungen erfolgt mit Hilfe eines Mikrocomputers, der in Abhängigkeit von der jeweils gewünschten Position der optischen Markierung oder Abbildung auf dem Objekt entsprechende elektrische Spannungen für die Ansteuerung der Galvanometer ausgibt. Die Vorrichtung kann beispielsweise zum Projizieren eines optischen Fadenkreuzes oder dergleichen Hilfsmarkierung auf einem Werktisch vorgesehen sein, um ein einfaches manuelles Positionieren eines Werkstücks und/oder eines Bearbeitungswerkzeugs an der durch das Fadenkreuz markierten Stelle des Werktischs zu ermöglichen.

Die Vorrichtung hat jedoch den Nachteil, daß sich beim Verschwenken der ersten, lichtquellenseitigen Umlenkeinrichtung die Projektion des Lichtbündels auf die Reflexionsfläche der zweiten Umlenkeinrichtung in ihrer Lage relativ zu der zweiten Umlenkeinrichtung verändert, d.h. der auf die zweite Umlenkeinrichtung projizierte Lichtfleck wird beim Verschwenken der ersten Umlenkeinrichtung in der Reflexionsebene der zweiten Umlenkeinrichtung seitlich ausgelenkt. Diese Auslenkung des Lichtflecks auf der zweiten Umlenkeinrichtung kann Ungenauigkeiten bei der Positionierung der zu projizierenden optischen Markierung oder Abbildung auf der Oberfläche des Obejekts zur Folge haben, die einerseits vom Achsabstand der Schwenkachsen der Umlenkeinrichtungen beziehungsweise dem Abstand der Auftrefforte des Lichtbündels auf den beiden Umlenkeinrichtungen und andererseits aber auch vom Abstand des Auftreffortes des Lichtbündels auf der zweiten Umlenkeinrichtung und dem Auftreffort des Lichtbündels auf der Objektoberfläche abhängig ist. Es ist zwar bereits bekannt, diese Einflußgrößen bei der Auslenkung der Umlenkeinrichtungen durch die Software des Mikrocomputers entsprechend zu berücksichtigen, jedoch ist eine solche softwaremäßige Korrektur recht aufwendig und erfordert einen nicht unerheblichen Teil der zur Verfügung stehenden Rechenzeit, was die Dynamik der Positioniereinrichtung begrenzt. Ungünstig ist außerdem, daß die Software bei der Installation der Vorrichtung genau auf die genannten Abstände eingerichtet werden muß. Auch können bei der softwaremäßigen Korrektur zusätzliche Positionierungsfehler auftreten.

Es besteht deshalb die Aufgabe, eine Vorrichtung der eingangs genannten Art zu schaffen, die bei geringem Rechenaufwand für die Ermittlung der mittels der Schwenkantriebe einzustellenden Schwenklagen der Umlenkeinrichtungen eine hohe Positioniergenauigkeit der optischen Markierung oder Abbildung auf dem Objekt ermöglicht.

Die Lösung dieser Aufgabe besteht darin, daß die Schwenkachse der ersten, lichtquellenseitigen Umlenkeinrichtung in der Mittelachse des Lichtbündels angeordnet ist, daß diese Umlenkeinrichtung wenigstens zwei Umlenkstellen für das Lichtbündel aufweist, von denen die erste auf dieser Schwenkachse und die zweite von der Schwenkachse beabstandet und derart ausgebildet ist, daß die Mittelachse des an der zweiten Umlenkstelle reflektieren Lichtstrahles die Schwenkachse der ersten Umlenkeinrichtung mit Abstand von der ersten Umlenkstelle schneidet, daß die Umlenkstelle der zweiten Umlenkeinrichtung in diesem Schnittpunkt angeordnet ist und daß die Schwenkachse der zweiten Umlenkeinrichtung durch diesen Schnittpunkt verläuft.

In vorteilhafter Weise trifft dadurch die Mittellinie des Lichtbündels unabhängig von den Schwenkpositionen der Umlenkeinrichtungen jeweils an derselben Stelle auf die zweiten Umlenkeinrichtung auf. Somit werden beim Verschwenken der Umlenkeinrichtungen ein seitliches Auswandern der von dem Lichtbündel auf den Umlenkeinrichtungen beleuchteten Bereiche und dadurch verursachte Positionierungenauigkeiten der auf das Objekt projizierten optischen Markierung oder Abbildung weitestgehend vermieden. Da die Umlenkeinrichtungen nur noch an einer Stelle von dem Lichtbündel beleuchtet werden, können sie entsprchend kompakt und materialsparend aufgebaut sein, wodurch einerseits die Kosten für die Positioniereinrichtung reduziert und andererseits aber auch deren Dynamik vergrößert wird. Außerdem ermöglicht die Vorrichtung bei der Positionierung des Lichtbündels auf dem Objekt eine hohe Präzision, da die in der Praxis immer vorhandenen Welligkeiten der Reflexionsflächen der Umlenkeinrichtungen aufgrund der vom Auslenkwinkel des Lichtbündels weitestgehend unabhängigen Ausleuchtung der Reflexionsflächen unkritisch sind.

Bei einer vorteilhaften Ausführungsform der Erfindung ist vorgesehen, daß die erste Umlenkeinrichtung drei Umlenkstellen aufweist, von denen die erste auf der Schwenkachse dieser Umlenkeinrichtung angeordent ist, und die beiden anderen Umlenkstellen auf einer parallel zu dieser Schwenkachse verlaufenden Geraden angeordnet sind. Das Lichtbündel kann dann an dem Umlenkstellen um jeweils 90° umgelenkt werden, wodurch eine gute Abbildungsqualität der optischen Markierung oder Abbildung auf dem Objekt erreicht wird.

Die vorstehend genannte Aufgabe kann auch dadurch gelöst werden, daß die Schwenkachse der ersten, lichtquellenseitigen Umlenkeinrichtung in der Mittelachse des Lichtbündels angeordnet ist, daß dieser Umlenkeinrichtung im Strahlengang des Lichtbündels eine ortsfeste Reflexionseinrichtung nachgeschaltet ist, deren Reflexionsfläche ein Teil einer rotationssymmetrisch zur Schwenkachse der ersten Umlenkeinrichtung verlaufenden Fläche ist, daß diese Reflexionsfläche derart angeordnet ist, daß die Mittelachse des an der Umlenkstelle der ersten Umlenkeinrichtung reflektieren Lichtstrahles die Schwenkachse der ersten Umlenkeinrichtung mit Abstand von dieser Umlenkstelle schneidet, daß die Umlenkstelle der zweiten Umlenkeinrichtung in diesem Schnittpunkt angeordnet ist und daß die Schwenkachse der zweiten Umlenkeinrichtung durch diesen Schnittpunkt verläuft.

Diese Lösung hat gegenüber der Lösung nach Anspruch 1 den zusätzlichen Vorteil, daß das Lichtbündel nur an einer einzigen Stelle auf die lichtquellenseitige erste Umlenkeinrichtung auftrifft, so daß diese entsprechend kompakt aufgebaut sein kann und bezüglich ihrer Schwenkachse ein entsprechend geringes Massenträgheitsmoment aufweisen kann. Die Vorrichtung ermöglicht dann hohe Positioniergeschwindigkeiten der auf das Objekt projizierten optischen Markierung oder Abbildung.

Vorteilhaft ist, wenn die Reflexionsfläche der ortsfesten Reflexionseinrichtung zum zweifachen Umlenken des Lichtbündels zwei einander zugewandte Reflexionsbereiche aufweist, die insbesondere in Kegelmantelflächen zweier konzentrisch zur Schwenkachse der ersten Umlenkeinrichtung angeordneter, vorzugsweise gleiche Öffnungswinkel aufweisender Kegelmantelflächen liegen. Das Lichtbündel kann dann an den Reflexionsbereichen jeweils um 90° umgelenkt werden, wodurch eine gute Abbildungsqualität der auf das Objekt projizierten optischen Markierung oder Abbildung erreicht wird.

Vorteilhaft ist, wenn die Reflexionsfläche der Reflexionseinrichtung ein Teil einer konzentrisch zur Schwenkachse der ersten Umlenkeinrichtung angeordneten Kreiszylinderfläche ist. Das von der ersten Umlenkeinrichtung auf die Reflexionseinrichtung auftreffende Lichtbündel braucht dann nur einmal an deren Reflexionsfläche umgelenkt zu werden und kann dann gleich auf die zweite Umlenkeinrichtung projiziert werden. Insgesamt ergibt sich dadurch eine besonderskompaktaufgebaute, kostengünstigherstellbare Vorrichtung.

Zweckmäßigerweise weist die lichtquellenseitige erste Umlenkeinrichtung eine konvexe Reflexionsfläche auf, deren Oberflächengeometrie derart auf die Oberflächengeometrie der konkaven Reflexionsfläche der ortsfesten Reflexionseinrichtung abgestimmt ist, daß das von der Lichtquelle aus gesandte Lichtbündel verzerrungsfrei auf die zweite Umlenkeinrichtung abgebildet wird. Dies wird vorzugsweise dadurch erreicht, daß die verschwenkbare erste Umlenkeinrichtung und die ortsfeste Reflexionseinrichtung in Ebenen, welche die erste Schwenkachse enthalten, jeweils betragsmäßig die gleiche Brennweite beziehungsweise den gleichen Krümmungsradius aufweisen.

Besonders vorteilhaft ist, wenn im Strahlengang des Lichtbündels zum Erzeugen der Abbildung als Vollbild eine optische Abbildungseinrichtung angeordnet ist. Das Lichtbündel bildet dann die optische Abbildung mittels der Abbildungseinrichtung unmittelbar als Vollbild auf das zu markierende Objekt ab, so daß eine Abtastung des zu markierenden Oberflächenbereichs des Objekts mit dem Lichtbündel beziehungsweise eine Scanbewegung des Lichtbündels entfallen kann. Bei einem zu der Vorrichtung ortsfest angeordneten Objekt ist eine Positionierbewegung des Lichtbündels somit nur noch dann erforderlich, wenn die Position der Abbildung auf der Objektoberfläche verändert werden soll. Die Positionierbewegung des Lichtbündels kann deshalb mit einer vergleichsweisen geringen Positioniergeschwindigkeit erfolgen, was einen besonders kostengünstigen Positionierantrieb ermöglicht, der beispielsweise einen Elektromotor, insbesondere einen Gleichstrom-Servomotor oder einen Schrittmotor, als Antrieb aufweisen kann.

Vorteilhaft ist, wenn die optische Abbildungseinrichtung im Strahlengang zwischen der Lichtquelle und der ersten Umlenkeinrichtung angeordnet ist. Die Abbildungseinrichtung kann dann ortsfest zur Lichtquelle angeordnet sein.

Bei einer bevorzugten Ausführungsform der Erfindung ist vorgesehen, daß die Abbildungseinrichtung ein in dem Lichtbündel angeordnetes diffraktives optisches Element zum Erzeugen der Abbildung aufweist. Derartige diffraktive optische Elemente sind zur Formung und/oder Teilung von Laserstrahlen als solche bekannt. Sie ermöglichen außer einem kompakten Aufbau auch eine hohe Abbildungsgenauigkeit. Außerdem lassen sich diffraktive Elemente in großer Stückzahl kostengünstig herstellen, beispielsweise mittels einer geeigneten Matrize.

Besonders vorteilhaft ist, wenn benachbart zu der zweiten Umlenkeinrichtung zwischen dieser und dem Objekt ein Weitwinkelobjektiv angeordnet ist, insbesondere ein Fischauge. Mittels des Fischauges kann ein besonders großer Öffnungswinkel des von der Vorrichtung auf das Objekt projizierten Lichtbündels erreicht werden. Dadurch kann die Vorrichtung in entsprechend geringem Abstand zum Objekt beziehungsweise zur Projektionsfläche angeordnet sein und dennoch können vergleichsweise große Bildflächen auf das Objekt projiziert werden. Da das Fischauge das Lichtbündel in Projektionsrichtung aufweitet, brauchen die Umlenkeinrichtungen nur in vergleichsweise kleinen Schwenkwinkelbereichen verstellt zu werden und es ergeben sich entsprechend kleine Lichtaustrittsfenster. Die optischen Eigenschaften des Weitwinkelobjektivs oder Fischauges, insbesondere eine mögliche Verzerrung der Abbildung im Randbereich, könnenbei der Positionierung der Umlenkeinrichtungen berücksichtigt werden. Dadurch können beim Positionieren des Lichtbündels in Randbereichen des Weitwinkelobjektivs Positionierungenauigkeiten der auf das Objekt projizierten optischen Markierung oder Abbildung weitestgehend vermieden beziehungsweise kompensiert werden.

Bei einer vorteilhaften Ausführungsform der Erfindung ist vorgesehen, daß die Abbildungseinrichtung zur Erzeugung unterschiedlicher Abbildungen mehrere, insbesondere in einem Wechselmagazin angeordnete, vorzugsweise diffraktive optische Elemente aufweist, und daß diese wechselweisen im Strahlengang des Lichtbündels positionierbar sind. Mit der Vorrichtung lassen sich somit auf einfache Weise unterschiedliche Abbildungen oder Markierungen, wie zum Beispiel ein Rechteck, ein Kreuz, ein Kreis und/oder ein Punkte-Raster erzeugen. Die Vorrichtung kann dadurch auf einfache Weise an die jeweilige Applikation angepasst werden. Gegebenenfalls ist es sogar möglich, daß die in dem Wechselmagazin befindlichen optischen Elemente gegen andere optische Elemente auswechselbar sind oder daß das gesamte Wechselmagazin aus der Vorrichtung entnehmbar und durch ein anderes ersetzbar ist.

Vorteilhaft ist, wenn die Vorrichtung einen Positionsspeicher mit mehreren Speicherplätzen aufweist, in denen jeweils ein Positionswert für eine auf dem Objekt zu markierende Stelle ablegbar ist, und wenn dem Positionsspeicher eine Ausleseeinrichtung zugeordnet ist, mit der die Positionswerte nacheinander aus dem Positionsspeicher entnehmbar und jeweils zum Positionieren der optischen Abbildung an der durch den jeweiligen Positionswert vorgegebenen Objektstelle an die Positioniereinrichtung übergebbar sind. Die optische Markierung oder die Abbildung kann dann auf einfache Weise nacheinander an einer Vielzahl von zuvor abgespeicherten Stellen an der Oberfläche des Objekts positioniert werden.

Bei einer vorteilhaften Ausführungsform der Erfindung weist die Vorrichtung wenigstens einen optischen Retroreflektor auf, der an dem Objekt innerhalb des die Abbildung erzeugenden Lichtbündels positionierbar ist, wobei dem Retroreflektor zum Empfangen eines von ihm reflektierten Lichtbündelanteils ein in dessen Strahlengang angeordneter optischer Empfänger zugeordnet ist, der mit einer Auswerteeinrichtung zum Detektieren eines reflektierten Lichtbündelanteils verbunden ist, wobei die Auswerteeinrichtung zum Positionieren der Abbildung an der durch den nächsten einer Folge von im Positionsspeicher abgelegten Positionswerten vorgegebenen Objektstelle mit der Ausleseeinrichtung verbunden ist. Der Retroreflektor kann dann beispielsweise mit einem Gegenstand verbunden sein, der an einer auf der Objektoberfläche optisch markierten Stelle positioniert werden soll. Sobald der Gegenstand an der markierten Stelle positioniert wird, wird ein Teil des Lichtbündels mittels des Retroreflektors zu dem Empfänger reflektiert, woraufhin die optische Abbildung automatisch an der nächsten, in den Positionsspeicher abgelegten Position positioniert wird, beispielsweise weil dort ein weiterer Gegenstand angeordnet werden soll. Somit können auf einfache Weise nacheinander eine Vielzahl von Positionen auf der Objektoberfläche markiert und mit Gegenständen versehen werden. Die Gegenstände können beispielsweise Befestigungselemente sein, mit denen ein Werkstück an einer bestimmten Stelle auf einem Werktisch befestigt werden soll.

Nachfolgend sind Ausführungsbeispiele der Erfindung anhand der Zeichnung näher erläutert. Es zeigen zum Teil stärker schematisiert:
- Fig. 1: einen Längsschnitt durch eine Vorrichtung zum Projizieren einer optischen Abbildung auf einem Objekt mittels eines auf das Objekt gerichteten Lichtbündels, das mittels zweier quer zueinander verschwenkbarer optischer Umlenkeinrichtungen an unterschiedliche Stellen des Objekts auslenkbar ist, wobei der Längsschnitt in der Mittelachse des Lichtbündels verläuft,
- Fig. 2: eine Darstellung ähnlich Fig. 1, wobei das Lichtbündel an der lichtquellenseitigen Umlenkeinrichtung jedoch nur zweimal umgelenkt ist,
- Fig. 3: eine Längsschnitt durch eine Vorrichtung zum Projizieren einer optischen Abbildung auf einem Objekt, die im Strahlengang des Lichtbündels zwei verschwenkbare optische Umlenkeinrichtungen aufweist, zwischen denen eine ortsfeste Reflexionseinrichtung angeordnet ist,
- Fig. 4: eine Darstellung ähnlich Fig. 3, wobei das Lichtbündel an der ortsfesten Reflexionseinrichtung jedoch nur einmal umgelenkt ist,

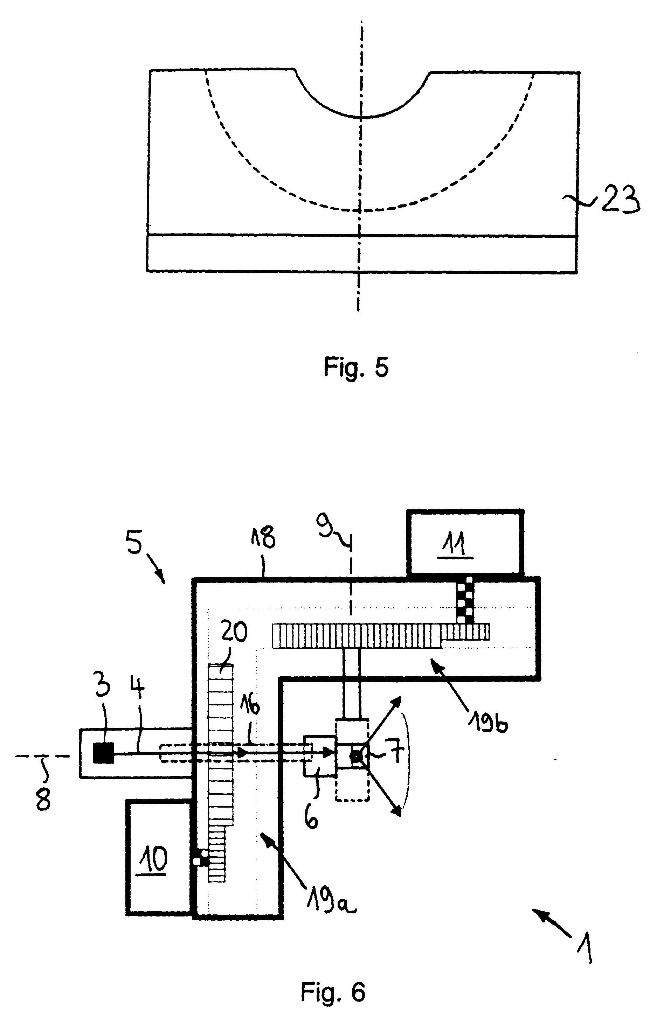

- Fig. 5: eine Seitenansicht der in Fig. 3 gezeigten ortsfesten Reflexionseinrichtung, wobei eine verdeckte Kante strichliniert dargestellt ist,
- Fig. 6: eine Aufsicht auf eine Vorrichtung zum Projizieren einer optischen Abbildung auf ein Objekt, wobei auch die Schwenkantriebe und die Zahnradgetriebe zum Verschwenken der beiden Umlenkeinrichtungen erkennbar sind und
- Fig. 7: die in Fig. 3 gezeigte, an einem Werktisch angeordnete Vorrichtung, wobei das von der Vorrichtung auf den Werktisch projizierte Lichtbündel an unterschiedlichen Stellen des Werktisches positionierbar ist und wobei für diese Stellen jeweils der Strahlengang des Lichtbündels erkennbar ist.

Eine im ganzen mit 1 bezeichnete Vorrichtung zum Erzeugen einer optischen Markierung oder Abbildung auf einem Objekt 2 weist eine Lichtquelle 3 zum Erzeugen eines Lichtbündels 4 auf, das auf das Objekt 2 gerichtet ist und auf diesem einen Lichtpunkt oder einen Lichtfleck erzeugt. Im Strahlengang des Lichtbündels 4 ist eine Positioniereinrichtung 5 angeordnet, mit welcher das Lichtbündel 4 in zwei quer zueinander verlaufenden Richtungen auslenkbar ist. Zum Erzeugen der optischen Abbildung auf dem Objekt 2 kann das Lichtbündel 4 in schneller Folge auf die unterschiedlichen, innerhalb des zu markierenden Oberflächenbereiches des Objekts 2 befindlichen Stellen ausgerichtet werden, beispielsweise indem das Lichtbündel 4 mittels der Positioniereinrichtung 5 entsprechend einer Scanbewegung an der Oberfläche des Objekts 2 ausgelenkt wird, wobei das Lichtbündel 4 jeweils an den zu beleuchtenden Stellen eingeschaltet ist, während es an den übrigen, nicht zu beleuchtenden Stellen dunkel getastet ist. Bei einer entsprechend großen Positioniergeschwindigkeit des Lichtbündels ergibt sich dann für das menschliche Auge auf dem Objekt 2 ein scheinbar stehendes Bild. Selbstverständlich kann das Lichtbündel 4 mittels der Positioniereinrichtung 5 aber auch so ausgelenkt werden, daß sich der auf das Objekt 2 projizierte Lichtpunkt entlang eines beliebigen Polygonzugs oder einer Linie bewegt, wobei diese gegebenenfalls mehrere Grade und/oder gekrümmte Abschnitte aufweisen kann. Auf diese Weise kann beispielsweise eine Kreislinie und/oder ein Fadenkreuz auf das Objekt 2 projiziert werden.

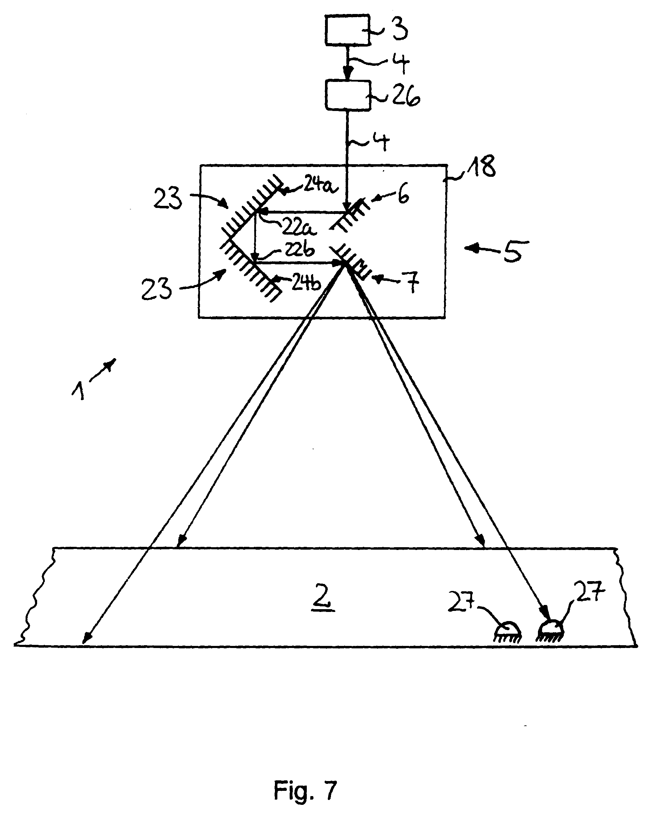

Die optische Markierung oder Abbildung kann aber auch mit Hilfe einer im Strahlengang des Lichtbündels 4 angeordneten, ein Vollbild erzeugenden Abbildungseinrichtung 26 generiert werden, die vorzugsweise zwischen der Lichtquelle 3 und der Positioniereinrichtung angeordnet ist, wie dies in Fig. 7 gezeigt ist.

Zur zweidimensionalen Lageveränderung der optischen Markierung auf dem Objekt 2 hat die Positioniereinrichtung 5 zwei im Strahlengang des Lichtbündels angeordnete Umlenkeinrichtungen 6, 7, die jeweils um eine Schwenkachse 8, 9 verschwenkbar gelagert und mittels Schwenkantrieben 10, 11 in unterschiedliche Schwenklagen positionierbar sind. Die Schwenkachse 8 der ersten, lichtquellenseitigen Umlenkeinrichtung 6 ist auf der Mittelachse des von der Lichtquelle 3 auf diese Umlenkeinrichtung 6 auftreffenden Lichtbündels 4 angeordnet. Die Schwenkachse 9 der zweiten, objektseitigen Umlenkeinrichtung 7 schneidet die Schwenkachse 8 der ersten Umlenkeinrichtung 6 und verläuft vorzugsweise rechtwinklig zu dieser Schwenkachse 8.

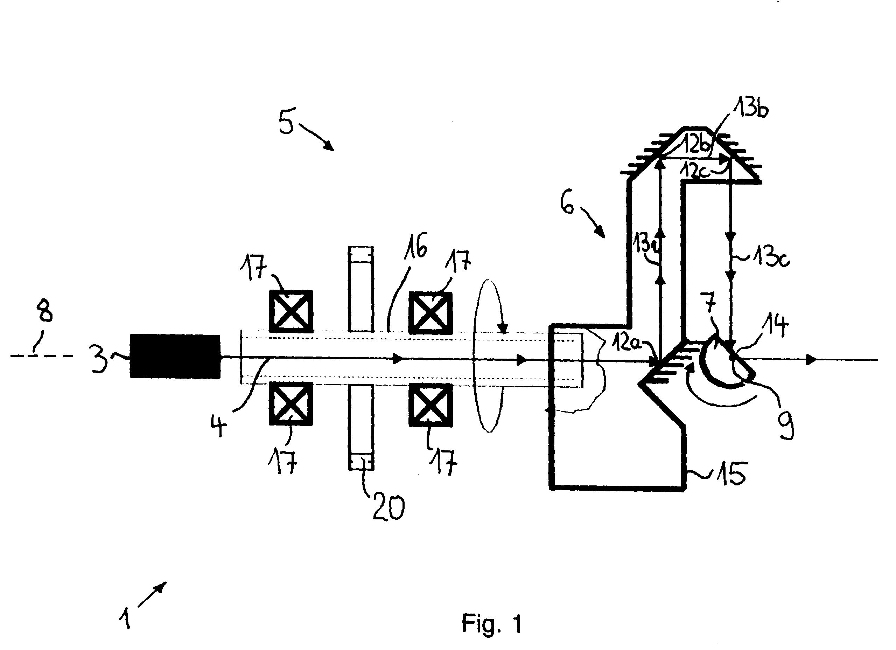

Bei dem Ausführungsbeispiel nach Fig. 1 weist die erste Umlenkeinrichtung 6 drei Umlenkstellen 12a, 12b, 12c für das Lichtbündel 4 auf, von denen die erste Umlenkstelle 12a an einer ersten Reflexionsfläche der Umlenkeinrichtung 6 auf deren Schwenkachse 8 angeordnet ist. An dieser Umlenkstelle 12a wird das Lichtbündel 4 um 90° in einen radial zur Schwenkachse 8 verlaufenden Lichtbündelabschnitt 13a umgelenkt und auf die zweite Umlenkstelle 12b projiziert. Diese ist in einer zweiten, von der Schwenkachse 8 beabstandeten Reflexionsfläche der Umlenkeinrichtung 6 angeordnet, wobei diese Reflexionsfläche der ersten Reflexionsfläche zugewandt ist. Die Oberflächennormale auf die zweite Reflexionsfläche ist an der zweiten Umlenkstelle 12b so relativ zu dem auf die Umlenkstelle 12b auftreffenden Lichtbündel 4 orientiert, daß das dieses an dieser Umlenkstelle 12b in einen parallel zu der Schwenkachse 8 verlaufenden Lichtbündelabschnitt 13b umgelenkt und auf die dritte Umlenkstelle 12c projiziert wird, die an einer der zweiten Reflexionsfläche zugewandten dritten Reflexionsfläche der Umlenkeinrichtung 6 vorgesehen ist. Die Oberflächennormale auf diese dritte Reflexionsfläche ist so orientiert, daß das Lichtbündel 4 an der Umlenkstelle 12 in einen parallel zu dem Lichtbündelabschnitt 13a verlaufenden Lichtbündelabschnitt 13c umgelenkt und auf die verlängerte Schwenkachse 8 der ersten Umlenkeinrichtung 6 zurückreflektiert wird. Die Umlenkstelle 14 der zweiten Umlenkeinrichtung 7 ist im Schnittpunkt des Lichtbündelabschnitts 13c mit der verlängerten Schwenkachse 8 der ersten Umlenkeinrichtung 6 angeordnet und von der Umlenkstelle 12a der ersten Umlenkeinrichtung 6 beabstandet. Dadurch wird erreicht, daß die Mittelachse des Lichtbündels 4 bei beiden Umlenkeinrichtungen 6, 7 jeweils unabhängig von deren Schwenkposition auf dieselbe Umlenkstelle 12a, 12b, 12c, 14 auftrifft. Somit wird bei einer Lageveränderung der auf das Objekt projizierten optischen Markierung oder Abbildung ein Auswandern der Umlenkstellen 12a, 12b, 12c, 14 auf den Reflexionsflächen der Umlenkeinrichtungen 6, 7 vermieden.

In Fig. 1 ist erkennbar, daß die die Umlenkstellen 12a, 12b, 12c aufweisenden Reflexionsflächen der Umlenkeinrichtung 6 durch Planspiegel gebildet sind, die an einem Halteteil 15 angeordnet sind, das mit einem Endbereich einer Hohlwelle 16 fest verbunden ist. Diese ist mittels Wälzlagern 17 um die Achse 8 verschwenkbar an einem Vorrichtungsgehäuse 18 gelagert. Dabei sind zwei Wälzlager 17 vorgesehen, die in Axialrichtung der Hohlwelle 16 zueinander versetzt angeordnet sind.

Die Umlenkeinrichtung 6 steht über ein Übersetzungsgetriebe 19a mit dem Schwenkantrieb 10 in Antriebsverbindung. Dieses weist ein Zahnrad 20 auf, das auf der Hohlwelle 16 in zwischen den beiden Wälzlagern 17 angeordnet ist und mit einem Antriebsritzel 21 des Schwenkantriebs 10 kämmt. Die zweite Umlenkeinrichtung 7 steht über ein entsprechendes Übersetzungsgetriebe 19b mit dem Schwenkantrieb 11 in Antriebsverbindung.

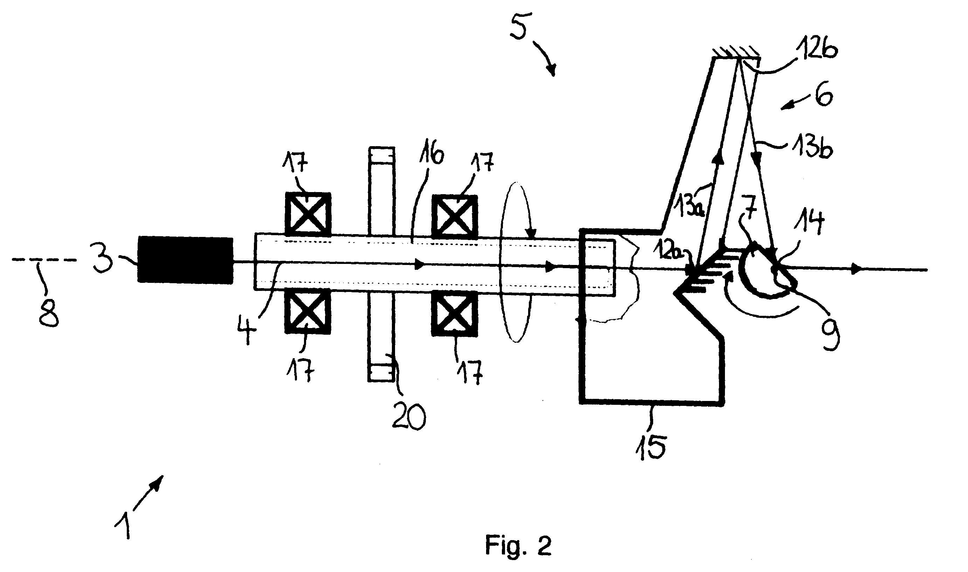

Bei dem Ausführungsbeispiel nach Fig. 2 ist das Lichtbündel 4 an der zweiten Umlenkeinrichtung 7 nur über zwei Umlenkstellen 12a, 12b geführt. Dabei ist die Oberflächennormale auf die zweite Reflexionsfläche an der zweiten Umlenkstelle 12b so relativ zu dem auf die Umlenkstelle 12b auftreffenden Lichtbündel 4 orientiert, daß dieses an der Umlenkstelle 12b in einen Lichtbündel-Abschnitt 13b umgelenkt wird, der mit Abstand von der ersten Umlenkstelle 12a an der Umlenkstelle 14 der zweiten Umlenkeinrichtung 7 auf die verlängerte Schwenkachse 8 der ersten Umlenkeinrichtung 6 auftrifft.

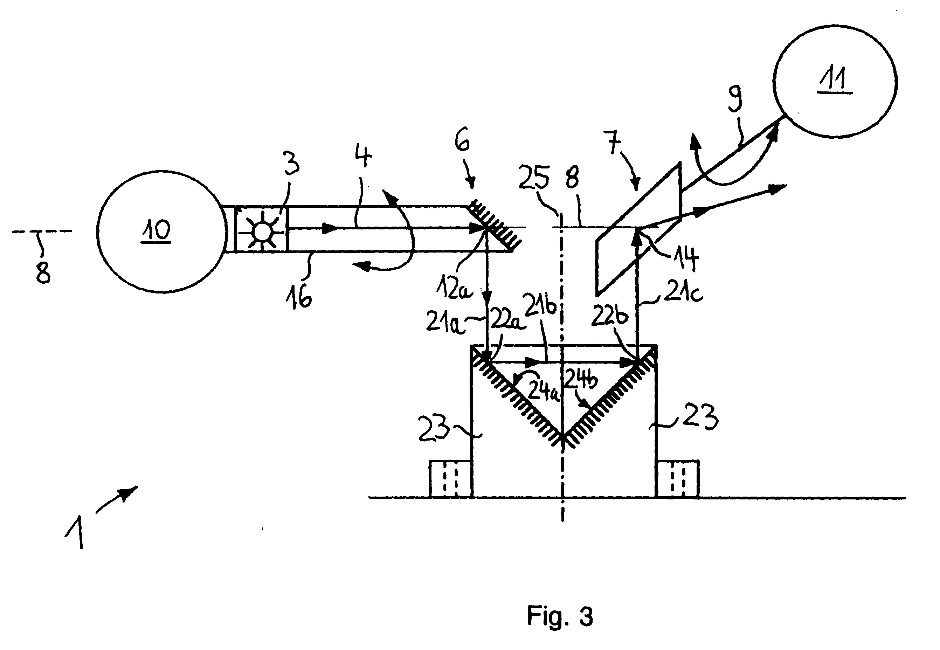

Bei dem Ausführungsbeispiel nach Fig. 3 weist die erste Umlenkeinrichtung 6 nur eine Umlenkstelle 12a für das Lichtbündel 4 auf, an der das Lichtbündel 4 um 90° in einen radial zur Schwenkachse 8 verlaufenden Lichtbündelabschnitt 21a umgelenkt und auf die erste Umlenkstelle 22a einer ortsfesten Reflexionseinrichtung 23 projiziert wird. Die Umlenkstelle 21a ist auf einer konkaven ersten Reflexionsfläche 24a angeordnet, die in der Mantelfläche eines ersten Kegels verläuft, dessen Kegelachse in der Schwenkachse der ersten Umlenkeinrichtung 6 angeordnet ist. Die Oberflächennormale auf die Reflexionsfläche 24a an der Umlenkstelle 22a und der Lichtbündelabschnitt 21a sind unabhängig von der Schwenkposition der ersten Umlenkeinrichtung 6 jeweils so zueinander angeordnet, daß das Lichtbündel 4 an der ersten Umlenkstelle 22a in einen parallel zu der Schwenkachse 8 der ersten Umlenkeinrichtung 6 verlaufenden Lichtbündelabschnitt 21b umgelenkt und auf eine zweite Umlenkstelle 22b der Reflexionseinrichtung 23 projiziert wird. Die Umlenkstelle 22b ist auf einer konkaven zweiten Reflexionsfläche 24b angeordnet, die in der Mantelfläche eines zweiten Kegels verläuft, der bezüglich einer rechtwinklig zu der Schwenkachse 8 verlaufenden Ebene spiegelsymmetrisch zu dem ersten Kegel angeordnet ist, wobei die Kegelspitzen dieser Kegel voneinander wegweisen.

Die Oberflächennormale auf die Reflexionsfläche 24b an der Umlenkstelle 22b und der Lichtbündelabschnitt 21b sind so zueinander angeordnet, daß das Lichtbündel 4 an der zweiten Umlenkstelle 22b in einen radial zu der Schwenkachse 8 der ersten Umlenkeinrichtung 6 verlaufenden Lichtbündelabschnitt 21c umgelenkt und auf eine im Schnittpunkt der beiden Schwenkachsen 8, 9 angeordnete und von der Umlenkstelle 12b der ersten Umlenkeinrichtung 6 beabstandete Umlenkstelle 14 der zweiten Umlenkeinrichtung 7 projiziert wird. Von dort wird das Lichtbündel auf das Objekt 2 ausgelenkt. Auch bei dem Ausführungsbeispiel nach Fig. 3 trifft die Mittelachse des Lichtbündels 4 jeweils unabhängig von den Schwenklagen der beiden Umlenkeinrichtungen 6, 7 jeweils an derselben Stelle 12a, 14 der Umlenkeinrichtungen 6, 7 auf diese auf.

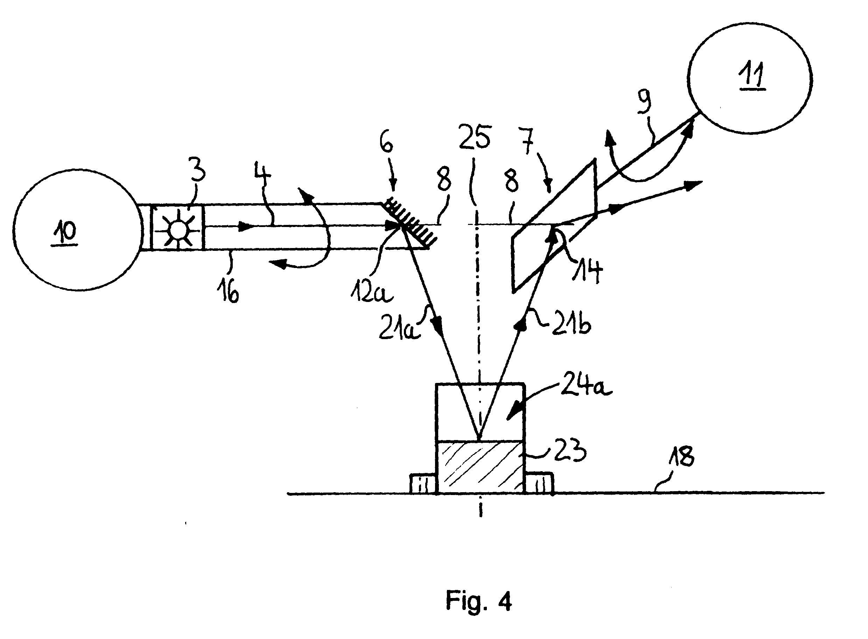

Fig. 4 zeigt ein weiteres Ausführungsbeispiel, bei dem das Lichtbündel 4 an der Reflexionseinrichtung 23 nur einmal umgelenkt wird. Dabei verläuft die Reflexionsfläche 24a der Reflexionseinrichtung 23 in einer konzentrisch zur Schwenkachse 8 der ersten Umlenkeinrichtung 6 angeordneten Kreiszylinderfläche. In Fig. 3 ist erkennbar, daß das in der Schwenkachse 8 verlaufende, von der Lichtquelle 3 kommende Lichtbündel 4 an der Umlenkstelle 12a der ersten Umlenkeinrichtung 6 in einen Lichtbündel-Abschnitt 21a umgelenkt wird, der an der Umlenkstelle 22a auf die Reflexionseinrichtung 23 auftrifft und von dort in den Lichtbündelabschnitt 21b reflektiert wird. Dieser trifft im Schnittpunkt der beiden Schwenkachsen 6, 7 auf die dort befindliche Umlenkstelle 14 der zweiten Umlenkeinrichtungen 7 auf, von wo er auf das Objekt 2 projiziert wird.

Bei dem Ausführungsbeispiel nach Fig. 4 sind die Winkel, welche die Lichtbündelabschnitte 21a und 21b jeweils mit einer normal zur Schwenkachse 8 durch die Umlenkstelle 22a verlaufenden Mittelebene 25 einschließt, betragsmäßig gleich groß, d.h. die Lichtbündel-Abschnitte 21a und 21b verlaufen spiegelsymmetrisch zu der Mittelebene 25. Es sind aber auch andere Ausführungsformen denkbar, bei denen diese Winkel unterschiedlich groß sind.

Bei dem Ausführungsbeispiel nach Fig. 4 weist die erste Umlenkeinrichtung 6 in Ebenen, welche die erste Schwenkachse 8 enthalten, jeweils eine konvexe, kreisbogenförmige Krümmung auf, deren Krümmungsradius betragsmäßig dem Krümmungsradius der kreiszylindrischen Reflexionsfläche 24a der Reflexionseinrichtung 23 entspricht. Dadurch wird erreicht, daß das von der Lichtquelle 3 ausgesandte Lichtbündel verzerrungsfrei in den Lichtbündel-Abschnitt 21b umgelenkt und auf die als Planspiegel ausgebildete Umlenkeinrichtung 7 projiziert wird. Somit wird beispielsweise ein von der Lichtquelle 3 ausgesandtes paralleles Lichtbündel 4 trotz der zylindrischen Reflexionsfläche 24a der Reflexionseinrichtung 23 in ein paralleles Lichtbündelabschnitt 21b umgelenkt. Bei einer Vorrichtung 1, bei der zwischen der Lichtquelle 3 und der Positioniereinrichtung 5 eine ein Vollbild erzeugende Abbildungseinrichtung 26 angeordnet ist (Fig. 7), kann der abzubildende Gegenstand somit verzerrungsfrei auf das Objekt 2 projiziert werden.

Bei dem Ausführungsbeispiel nach Fig. 7 weist ein an einer mittels der Vorrichtung 1 auf den Werktisch 2 projizierten optischen Markierung zu positionierender Gegenstand einen Retroreflektor 27 auf. Dieser reflektiert das auf den Werktisch 2 projizierte Lichtbündel 4 in sich selbst zurück, wenn der Retroreflektor 27 an der auf dem Werktisch 2 optisch markierten Stelle positioniert ist. Zur Detektion des zurückreflektierten Lichtbündels oder Lichtbündelanteils weist die Vorrichtung 1 einen in der Zeichnung nicht dargestellten optischen Empfänger auf, der mit einer Auswerteeinrichtung verbunden ist, welche beim Detektieren eines zurückreflektierten Lichtbündelanteils die Schwenklage der Umlenkeinrichtung(en) verändert, um die optische Markierung an einer weiteren, auf dem Werktisch 2 zu markierenden Stelle zu positionieren.

Die Vorrichtung 1 zum Erzeugen einer optischen Abbildung auf einem Objekt 2 weist also eine Lichtquelle 3 zum Erzeugen eines Lichtbündels 4 und eine Positioniereinrichtung 5 zum Positionieren des Lichtbündels 4 an unterschiedlichen Stellen des Objekts 2 auf. Zur zweidimensionalen Lageveränderung der optischen Abbildung auf dem Objekt 2 hat die Positioniereinrichtung 5 wenigstens zwei im Strahlengang des Lichtbündels 4 angeordnete, Umlenkstellen 12a, 12b, 12c, 14 aufweisende optische Umlenkeinrichtungen 6, 7, die jeweils um eine Schwenkachse 8, 9 verschwenkbar gelagert sind. Die Schwenkachse 8 der ersten, lichtquellenseitigen Umlenkeinrichtung 6 ist in der Mittelachse des Lichtbündels 4 angeordnet. Der Umlenkeinrichtung 6 ist eine ortsfeste Reflexionseinrichtung 23 nachgeschaltet, deren Reflexionsfläche 24a, 24b ein Teil einer rotationssymmetrisch zur Schwenkachse 8 verlaufenden Fläche ist, die so angeordnet ist, daß die Mittelachse des an der Umlenkstelle 12a der ersten Umlenkeinrichtung 6 reflektieren Lichtstrahles 21a, 21b, 21c die Schwenkachse 8 der ersten Umlenkeinrichtung 6 schneidet. Die Umlenkstelle 14 der zweiten Umlenkeinrichtung 7 ist in diesem Schnittpunkt angeordnet ist und die Schwenkachse 9 der zweiten Umlenkeinrichtung 7 verläuft durch diesen Schnittpunkt.

## Patentansprüche

1. Vorrichtung (1) zum Erzeugen einer optischen Markierung oder Abbildung auf einem Objekt (2), beispielsweise einem Werktisch, mit einer Lichtquelle (3) zum Erzeugen eines auf das Objekt (2) gerichteten Lichtbündels (4), und mit einer Positioniereinrichtung (5) zum Positionieren des Lichtbündels (4) an unterschiedlichen Stellen des Objekts (2), wobei die Positioniereinrichtung (5) zur zweidimensionalen Lageveränderung der optischen Markierung auf dem Objekt (2) wenigstens zwei im Strahlengang des Lichtbündels (4) angeordnete, Umlenkstellen (12a, 12b, 12c, 14) aufweisende optische Umlenkeinrichtungen (6, 7) hat, wobei die Umlenkeinrichtungen (6, 7) jeweils tun eine Schwenkachse (8, 9) verschwenkbar gelagert und mittels Schwenkantrieben (9, 10) positionierbar sind, und wobei die Schwenkachsen (8, 9) quer zueinander angeordnet sind, **dadurch gekennzeichnet**, daß die Schwenkachse (8) der ersten, lichtquellenseitigen Umlenkeinrichtung (6) in der Mittelachse des Lichtbündels (4) angeordnet ist, daß diese Umlenkeinrichtung (6) wenigstens zwei Umlenkstellen (12a, 12b, 12c) für das Lichtbündel (4) aufweist, von denen die erste Umlenkstelle (12a) auf dieser Schwenkachse (8) und die zweite Umlenkstelle (12b, 12c) von der Schwenkachse (8) beabstandet und derart ausgebildet ist, daß die Mittelachse des an der zweiten Umlenkstelle (12b, 12c) reflektieren Lichtstrahles (13b, 13c) die Schwenkachse (8) der ersten Umlenkeinrichtung (6) mit Abstand von der ersten Umlenkstelle (12a) schneidet, daß die Umlenkstelle (14) der zweiten Umlenkeinrichtung (7) in diesem Schnittpunkt angeordnet ist und daß die Schwenkachse (9) der zweiten Umlenkeinrichtung (7) durch diesen Schnittpunkt verläuft.

2. Vorrichtung (1) nach Anspruch 1, dadurch gekennzeichnet, daß die erste Umlenkeinrichtung (6) drei Umlenkstellen (12a, 12b, 12c) aufweist, von denen die erste Umlenkstelle (12a) auf der Schwenkachse (8) dieser Umlenkeinrichtung (6) angeordent ist, und die beiden anderen Umlenkstellen (12b, 12c) auf einer parallel zu dieser Schwenkachse (8) verlaufenden Geraden angeordnet sind.

3. Vorrichtung (1) nach dem Oberbegriff von Anspruch 1, **dadurch gekennzeichnet**, daß die Schwenkachse (8) der ersten, lichtquellenseitigen Umlenkeinrichtung (6) in der Mittelachse des Lichtbündels (4) angeordnet ist, daß dieser Umlenkeinrichtung (6) im Strahlengang des Lichtbündels (4) eine ortsfeste Reflexionseinrichtung (23) nachgeschaltet ist, deren Reflexionsfläche (24a, 24b) ein Teil einer rotationssymmetrisch zur Schwenkachse (8) der ersten Umlenkeinrichtung (6) verlaufenden Fläche ist, daß diese Reflexionsfläche (24a, 24b) derart angeordnet ist, daß die Mittelachse des an der Umlenkstelle (12a) der ersten Umlenkeinrichtung (6) reflektieren Lichtstrahles (21a, 21b, 21c) die Schwenkachse (8) der ersten Umlenkeinrichtung (6) mit Abstand von dieser Umlenkstelle (12a) schneidet, daß die Umlenkstelle (14) der zweiten Umlenkeinrichtung (7) in diesem Schnittpunkt angeordnet ist und daß die Schwenkachse (9) der zweiten Umlenkeinrichtung (7) durch diesen Schnittpunkt verläuft.

4. Vorrichtung (1) nach Anspruch 3, dadurch gekennzeichnet, daß die Reflexionsfläche (24a, 24b) der ortsfesten Reflexionseinrichtung zum zweifachen Umlenken des Lichtbündels zwei einander zugewandte Reflexionsbereiche aufweist, die insbesondere in Kegelmantelflächen zweier konzentrisch zur Schwenkachse (8) der ersten Umlenkeinrichtung (6) angeordneter, vorzugsweise gleiche Öffnungswinkel aufweisender Kegelmantelflächen liegen.

5. Vorrichtung (1) nach Anspruch 3 oder 4, dadurch gekennzeichnet, daß die Reflexionsfläche (24a, 24b) der Reflexionseinrichtung (23) ein Teil einer konzentrisch zur Schwenkachse (8) der ersten Umlenkeinrichtung (6) angeordneten Kreiszylinderfläche ist.

6. Vorrichtung (1) nach einem der Ansprüche 3 bis 5, dadurch gekennzeichnet, daß die lichtquellenseitige erste Umlenkeinrichtung (6) eine konvexe Reflexionsfläche aufweist, deren Oberflächengeometrie derart auf die Oberflächengeometrie der konkaven Reflexionsfläche (24a, 24b) der ortsfesten Reflexionseinrichtung (23) abgestimmt ist, daß das von der Lichtquelle (4) ausgesandte Lichtbündel (4) verzerrungsfrei auf die zweite Umlenkeinrichtung (7) umgelenkt wird.

7. Vorrichtung (1) nach einem der Ansprüche 1 bis 6, dadurch gekennzeichnet, daß im Strahlengang des Lichtbündels (4) zum Erzeugen der Abbildung als Vollbild eine optische Abbildungseinrichtung (26) angeordnet ist.

8. Vorrichtung (1) nach einem der Ansprüche 1 bis 7, dadurch gekennzeichnet, daß die optische Abbildungseinrichtung (26) im Strahlengang zwischen der Lichtquelle (3) und der ersten Umlenkeinrichtung (6) angeordnet ist.

9. Vorrichtung (1) nach einem der Ansprüche 1 bis 8, dadurch gekennzeichnet, daß die Abbildungseinrichtung (26) ein in dem Lichtbündel (4) angeordnetes diffraktives optisches Element zum Erzeugen der Abbildung aufweist.

10. Vorrichtung (1) nach einem der Ansprüche 1 bis 9, dadurch gekennzeichnet, daß benachbart zu der zweiten Umlenkeinrichtung (7) zwischen dieser und dem Objekt (2) ein Weitwinkelobjektiv angeordnet ist, insbesondere ein Fischauge.

11. Vorrichtung (1) nach einem der Ansprüche 1 bis 10, dadurch gekennzeichnet, daß die Abbildungseinrichtung (26) zur Erzeugung unterschiedlicher Abbildungen mehrere, insbesondere in einem Wechselmagazin angeordnete, vorzugsweise diffraktive optische Elemente aufweist, und daß diese wechselweisen im Strahlengang des Lichtbündels (4) positionierbar sind.

12. Vorrichtung (1) nach einem der Ansprüche 1 bis 11, dadurch gekennzeichnet, daß sie einen Positionsspeicher mit mehreren Speicherplätzen aufweist, in denen jeweils ein Positionswert für eine auf dem Objekt (2) zu markierende Stelle ablegbar ist, und daß dem Positionsspeicher eine Ausleseeinrichtung zugeordnet ist, mit der die Positionswerte nacheinander aus dem Positionsspeicher entnehmbar und jeweils zum Positionieren der optischen Abbildung an der durch den jeweiligen Positionswert vorgegebenen Objektstelle an die Positioniereinrichtung (5) übergebbar sind.

13. Vorrichtung (1) nach einem der Ansprüche 1 bis 12, dadurch gekennzeichnet, daß sie wenigstens einen optischen Retroreflektor (27) aufweist, der an dem Objekt (2) innerhalb des die Abbildung erzeugenden Lichtbündels (4) positionierbar ist, daß dem Retroreflektor (27) zum Empfangen eines von ihm reflektierten Lichtbündelanteils ein in dessen Strahlengang angeordneter optischer Empfänger zugeordnet ist, der mit einer Auswerteeinrichtung zum Detektieren eines reflektierten Lichtbündelanteils verbunden ist, und daß die Auswerteeinrichtung zum Positionieren der Abbildung an der durch den nächsten einer Folge von im Positionsspeicher abgelegten Positionswerten vorgegebenen Objektstelle mit der Ausleseeinrichtung verbunden ist.
